# EUROPÄISCHE PATENTSCHRIFT

(11) **EP 2 537 997 B1**
(45) Veröffentlichungstag und Bekanntmachung des Hinweises auf die Patenterteilung: **11.12.2013**
(21) Anmeldenummer: 12004730.3
(22) Anmeldetag: 25.06.2012
(51) Int. Cl.: E04D 13/076, A47L 9/24, B23B 27/02

(54) **Vorrichtung zum Reinigen von Dachrinnen**
Device for cleaning roof gutters
Dispositif de nettoyage de gouttières

(30) Priorität: 24.06.2011 DE 202011102501 U; 27.10.2011 DE 202011107191 U; 24.03.2012 DE 202012003050 U
(43) Veröffentlichungstag der Anmeldung: 26.12.2012
(73) Patentinhaber: Wiesner, Michael, 14089 Berlin (DE)
(72) Erfinder: Wiesner, Michael, 14089 Berlin (DE)
(74) Vertreter: Scholz, Hartmut

(56) Entgegenhaltungen:
- DE-A1- 19 608 799
- DE-C- 717 789
- JP-A- 11 153 255
- US-A- 5 056 187

## Beschreibung

Die vorliegende Erfindung betrifft einen Vorrichtungssatz zum Reinigen von Dachrinnen umfassend mindestens eine Saugvorrichtung und ein verlängerbares Saugrohrsystem, die Saugvorrichtung mit dem verlängerbaren Saugrohrsystem verbindbar ist, das Saugrohrsystem aus einem flexiblen Rohrabschnitt und einem starren Rohrabschnitt aus ineinander steckbaren Rohrsegmenten besteht und dem starren Rohrabschnitt ein Ansaugtrichter zugeordnet ist, der in das Profil einer zu reinigenden, handelsüblichen Dachrinne einführbar ist.

Aus der DE 196 08 799 A1 ist ein derartiger Dachrinnenreiniger mit einem Allessauger bekannt, der jedoch den Nachteil hat, häufig zu verstopfen. Dies erfordert eine zeitaufwendige manuelle Reinigung des Verlängerungsrohres, was oft mit einer erheblichen Verschmutzung des Anwenders einhergeht.

Aus der DE 100 09 893 A1 ist eine Vorrichtung bekannt, bei der die Verunreinigungen aus einer Dachrinne abgesaugt werden können. Das Absauggerät wird vom Erdboden aus in die Dachrinne eingehängt und in ihr entlang geführt. Angetrieben wird die Vorrichtung durch einen Laubsaugermotor, der eine Schwerefalle aufweist, bei der leichte Bestandteile, beispielsweise Blätter, von schweren Bestandteilen, beispielsweise nasse Blätter, Wasser, Steine etc., durch die Schwerkraft getrennt werden sollen. Derartige Saugmotoren sind in der Regel zu schwach, um eine wirkungsvolle Reinigung der Dachrinne sicherzustellen. Zudem muss der Laubsauger durch den Anwender ständig frei gehalten werden, was einen erheblichen Aufwand an körperlicher Kraft bedeutet.

Aus der DE 20 2006 016 998 U1 ist es bekannt, einen Laubsauger mit einem Verlängerungsrohr zu versehen und zum Reinigen von Dachrinnen zu verwenden. Mit einer derartigen Vorrichtung lässt sich jedoch aufgrund des relativ geringen Wirkungsgrades nur trockenes und damit leichtes Laub ansaugen.

Die US 5,056,187 A offenbart einen Aufsatz für ein Vakuumsystem zur Reinigung der Dachrinne eines Gebäudes vom Boden aus.

Aus der JP 11 153255 A ist eine Möglichkeit der Rohrverlängerung beschrieben, bei der aufeinander abgestimmte Anschlussstücke vorgesehen sind.

Aus der DE 717 789 C wiederum ist eine Ein-und Ausziehvorrichtung für den Zusammenbau von Rohrverbindungen mit Rollgummidichtungen bekannt.

Alle diese Vorrichtungen sind mit dem Nachteil behaftet, entweder schwer zu handhaben und unhandlich zu sein, oder eine nicht ausreichende Saugleistung zur Verfügung stellen. Sie sind damit ungeeignet beispielsweise nasses oder nadeliges Laub und andere sperrige Verunreinigungen aus einer Dachrinne zu entfernen. Da die Dachhöhen bis zu den zu reinigenden Dachrinnen sehr unterschiedlich sind, sind auch unterschiedlich lange Saugrohre erforderlich. Die Handhabung, die Lagerung und der Transport derartig unterschiedlich langer Rohre ist recht aufwändig und umständlich.

Aufgabe der vorliegenden Erfindung ist es, eine Vorrichtung zum Reinigen von Dachrinnen zu schaffen, die einfach und flexibel in der Anwendung bei unterschiedlichen Rohrlängen ist und wie die eine sichere und dauerhafte Aufrechterhaltung der Saugleistung gewährleistet.

Diese Aufgabe wird durch die Merkmale des Anspruchs 1 gelöst. Vorteilhafte Ausführungsformen der Erfindung sind Gegenstand der Unteransprüche. Insbesondere besteht der flexible Rohrabschnitt aus einem Kunststoffrohr mit eingearbeiteter Verstärkung. Die Einzellänge der ineinandersteckbaren Rohrsegmente des starren Rohrabschnitt ist etwa zehnmal so groß wie ihr Innendurchmesser, und die ineinander steckbaren Rohrsegmente sind für einen Innendruck von mindestens 150 mbar bis 220 mbar ausgelegt. Der Satz umfasst ferner eine Trennvorrichtung zum Trennen der ineinander gesteckten Rohrsegmente besteht aus einer Streckstrebe mit zwei gegeneinander bewegbaren Strebenabschnitten, die durch ein Mittelscharnier verbunden sind. Die freien Enden sind mit Kontaktmitteln zur Anlage an Rohrmuffen der Rohrsegmente versehen. Die Streckstrebe ist im gestreckten Zustand der Strebenabschnitte etwas länger als der Abstand von der Rohrmuffe eines Rohrsegments zur Rohrmuffe des nächsten Rohrsegments. Weitere Vorteilhafte Ausführungsformen der Erfindung sind Gegenstand der Unteransprüche.

Durch diese Maßnahmen wird verhindert, dass es durch einen erhöhten Unterdruck im flexiblen Schlauchabschnitt zu einer Querschnittsverringerung durch Implosion kommt, die zu einer Verringerung der Saugleistung führt. Vorteilhafter Weise können auch die flexible Rohrabschnitt der Saugvorrichtung in der Länge variierbar ausgebildet, ohne dass bei Zugspannung deren Durchmesser verkleinert wird.

Ferner können sehr unterschiedliche Dachhöhen durch eine beliebig veränderbare Anzahl von Rohrsegmenten überwunden werden. Zum leichteren Transport und der Vereinfachung der Lagerung zwischen den einzelnen Einsätzen können in die Rohrsegmente leicht voneinander getrennt werden, auch wenn sie sich während des Gebrauches sehr fest ineinander verkeilt haben

Durch ein manuelles Nachrücken der Saugvorrichtung kann der Einsatzradius des flexiblen Schlauchabschnittes bedarfgerecht beliebig verlängert werden, ohne sie auf Dauer halten zu müssen.

Der starr ausgebildete Rohrabschnitt besteht vorteilhaft Weise im Wesentlichen aus einer variablen Anzahl von Rohrsegmenten, die miteinander verbunden werden können. Durch diese Maßnahme kann die Länge des starren Rohrabschnitts variiert und an die jeweilige Höhe der zu reinigenden Dachrinne angepasst werden. Die Rohrsegmente können mittels ihrer Steckverbindungen zu beliebigen Längen miteinander zu verbunden werden. Die Rohrsegmente sind üblicherweise mit Muffen versehenen, an die zum Trennen die Trennvorrichtung angelegt werden kann, die mit einer Streckstrebe versehen ist und aus zwei gegeneinander schwenkbaren Strebenabschnitten besteht.

Die Strebenabschnitte der Streckstreben sind bei einer bevorzugten Ausführungsform mit Rohrhälften aus in Längsrichtung aufgesägten Rohren versehen. Die Rohrhälften weisen vorzugsweise den gleichen Innendurchmesser wie die zu trennenden Rohreegmente auf. Die Streckstrebe ist etwa mittig ein Mittelscharnier versehen und an ihren Enden über Endscharniere mit jeweils zugeordneten Rohrhälften verbunden.

Zwischen einzelnen Rohrsegmenten können Dichtungen, vorzugsweise O-Ringe, vorgesehen sein, um ungewollte Stoffübergänge von einem Raum in einen anderen zu verhindern bzw. zu begrenzen. Neben das ungewollte Austreten oder Vermischen zu verhindern, soll auch ein Druckabfall im Rohrsystem zwischen den flexiblen Rohrabschnitten, den einzelnen starren Rohrsegmenten, dem Umlenkbogen und dem Trichter verhindert werden. A

Gemäß einer weiteren besonders vorteilhaften Ausführungsform der erfindungsgemäßen Vorrichtung ist das freie Ende des obersten Rohrsegmentes mit einem Umlenkrohr verbunden ist, dass aus zwei bis vier abgewinkelten Rohrabschnitten besteht. Die abgewinkelten Rohrabschnitte können axial gegeneinander verdreht werden und bilden einen Anstellwinkel, der der Lage und Position der zu reinigenden Dachrinne angepasst und bis zu 180° umgelenkt werden kann.

Das Umlenkrohr ist an seinem äußeren freien Ende mit einem Ansaugtrichter verbunden, der eine Ansaugöffnung aufweist. In die Ansaugöffnung können Leitmittel eingebracht sein, mit der eine tangentiale Strömung in den Rohren erzeugt werden kann. Um den Ansaugtrichter dem Verlauf der Geometrie und der Zugänglichkeit einer Dachrinne anpassen zu können, ist es in einer vorteilhaften Ausführungsform vorgesehen, den Ansaugtrichter relativ zu dem Umlenkrohr drehbar und arretierbar auszubilden. Damit die Strömungsgeschwindigkeit im gesamten Rohrsystem möglichst konstant gehalten werden kann, ist es vorgesehen, den Ansaugtrichter an seiner Schmalseite mindestens eine Breite von 25 bis 40 mm zu geben.

Um ein Verdrehen oder ein Abdrücken des Rohrsystems zu verhindern, ist in einer besonders vorteilhaften Ausführungsform der erfindungsgemäßen Vorrichtung vorgesehen, den flexiblen Rohrabschnitt relativ zu dem starren Rohrabschnitt und der Saugvorrichtung axial drehbar auszubilden.

Damit die durch die Trocken- oder Nass-Saugvorrichtung erzeugte Strömungsgeschwindigkeit im Rohrsystem möglichst konstant bleibt und sich im Idealfall eine in Axialrichtung rotierende Strömungswalze ausbildet, sind die Leitmittel vorgesehen und der flexible Rohrabschnitt, der starre Rohrabschnitt, das Umlenkrohr und der Ansaugtrichter weisen im Wesentlichen die gleiche Querschnittsfläche auf.

Gemäß einer weiteren besonders vorteilhaften Ausführungsform der erfindungsgemäßen Vorrichtung sind die Rohrsegmente des starren Rohrabschnittes im Wesentlichen ein Verhältnis von Länge zu Innendurchmesser von ca. 1 : 10 auf. Es hat sich gezeigt, dass diese Länge im Verhältnis zu den Wandstärken der Rohrabschnitte am günstigsten für die äußere und innere Stabilität, das Eigengewicht und die Versandgröße ist.

Weitere vorteilhafte Maßnahmen sind in den Unteransprüchen beschrieben. Die Erfindung ist in den beiliegenden Zeichnungen dargestellt und wird nachfolgend näher beschrieben; es zeigt:
- Figur 1: eine schematische Gesamtansicht der erfindungsgemäßen Reinigungsvorrichtung in Arbeitsposition, bestehend aus einer Saugvorrichtung, die mit einem Rohrsystem verbunden werden kann;
- Figur 2: die erfindungsgemäße Trennvorrichtung zum Trennen der einander gesteckten Rohrabschnitte des Rohrsystems gemäß Figur 1, bestehend aus zwei Rohrhälften, die über eine Streckstrebe mit zwei angewinkelten Strebenabschnitten so mit einander verbunden sind, dass ihre Gesamtlänge beim Strecken in der Strebensabschnitte vergrößert;
- **Figur 3**: als Ausführung "A" eine Trennvorrichtung nach Figur 2, die aus reinen Rohrhälften besteht, die über ein Mittelscharnier miteinander verbunden sind und bis zur Geraden gestreckt werden können;
als Ausführung "B" eine Trennvorrichtung nach Figur 2, die aus nackten Streckstreben besteht, die über ein Mittelscharnier miteinander verbunden sind;
als Ausführung "C" eine Trennvorrichtung nach Figur 2, die aus Streckstreben besteht, an deren Enden Rohrhälften fest angebracht sind, und die über ein Mittelscharnier miteinander verbunden sind.

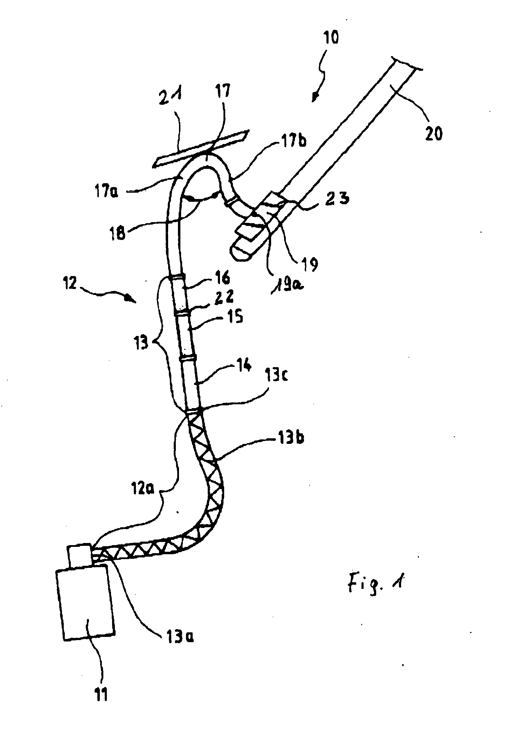

wie die Figur 1 zeigt, besteht die erfindungsgemäßen Reinigungsvorrichtung 10 im Wesentlichen aus einer Saugvorrichtung 11, die sowohl trocken als auch nass, beispielsweise durch Regenwasser, betrieben werden kann. Die Reinigungsvorrichtung 10 ist mit einem Rohrsystem 12 verbunden, das aus einer Vielzahl von Rohrsegmenten 14, 15 und 16 besteht, die je nach erforderlicher Länge variiert und ineinander gesteckt werden können. Die Rohrsegmenten 14, 15 und 16 weisen eine Länge auf, die ca. 10x größer als ihr Innendurchmesser ist.

In der beispielhaft in Arbeitsposition dargestellten Ausführungsform weist das Rohrsystem 12 einen flexiblen Rohrabschnitt 12a und einen starren Rohrabschnitt 13 auf. Der flexible Rohrabschnitt 12a ist mit seinem unteren freien Ende 13a mit der Saugvorrichtung 11 verbunden.

Der flexible Rohrabschnitt 12a besteht aus einem flexiblen, vorzugsweise durchsichtigen Kunststoffrohr, in das eine Verstärkung 13b eingearbeitet ist. Die Verstärkung 13b kann ein textiles Gewebe oder eine radial umlaufende Spiralfeder aus Metall oder flexiblem Kunststoff sein.

Der flexible Rohrabschnitt 12a ist mit seinem unteren freien Ende 13a axial drehbar mit der Saugvorrichtung 11 verbunden. Denkbar sind hier auch drehgelagerte Steckverbindungen mit Bajonettanschlüssen oder einer entsprechende Schraubverbindung, die ein freies axiales Drehen ermöglicht.

Mit seinem oberen freien Ende 13c ist der flexible Rohrabschnitt 12a ebenfalls axial drehbar mit dem starren Rohrabschnitt 13 verbunden sein. Der starre Rohrabschnitt 13 besteht aus einer variablen Anzahl von Rohrsegmenten 14, 15 und 16 die vorzugsweise ineinander gesteckt sind; sie können auch miteinander verschraubt oder mittels Schnellverschlüssen miteinander verbunden sein.

In der dargestellten Arbeitsposition ist das freie Ende des obersten Rohrsegmentes 16 mit einem Umlenkrohr 17 verbunden, das aus zwei bis vier abgewinkelten Rohrabschnitten 17a und 17b besteht. Die zwei dargestellten, abgewinkelten Rohrabschnitte 17a und 17b können axial frei gegeneinander verdreht werden. Sie bilden einen Anstellwinkel 18, der der Lage und Position der zu reinigenden Dachrinne 20 angepasst werden kann. Über die Anzahl der Rohrabschnitte 17a, 17b kann der Anstellwinkel 18 und damit die jeweils erforderliche Arbeitsrichtung der Reinigungsvorrichtung 10 im Bereich von 90 bis 180° variiert werden. Zwischen den Rohrabschnitten 12a, 13, 17a, 17b und Rohrsegmenten 14, 15 und 16 können flexible Dichtungen 22, beispielsweise O-Ringe, vorgesehen sein, um das Ansaugen von Falschluft vermeiden.

Das Umlenkrohr 17 ist in Arbeitsrichtung mit einem Ansaugtrichter 19 verbunden, der eine Ansaugöffnung 19a aufweist. Der Ansaugtrichter 19 ist ebenfalls axial drehbeweglich. Durch diese Drehbeweglichkeit kann der Ansaugtrichter 19 relativ zu einer zu reinigenden Dachrinne 20 gedreht werden. Dadurch wird ein Höchstmaß an Bewegungsfreiheit zwischen dem starren Rohrabschnitt 13, dem Umlenkrohr 17 und der Position der zu reinigende Dachrinne 20 ermöglicht.

Damit die Saugwirkung in dem Rohrsystem möglichst konstant bleibt und sich im Idealfall eine in Axialrichtung rotierende Strömungswalze ausbildet, sind in dem Ansaugtrichter 19 Leitmittel 23 vorgesehen, das eine tangentiale Verwirbelung der Saugströmung erzeugt. Damit wird die Gefahr, dass sich das Rohrsystem 12 durch das angesagte Laub zusetzt verringert. Verner weist der der flexible Rohrabschnitt12a, der starre Rohrabschnitt 13, das Umlenkrohr 17 und der Ansaugtrichter 19 im Wesentlichen die gleiche Querschnittsfläche auf.

Zur Erleichterung der Handhabung im Bereich der Dachrinne 20 kann dem Umlenkrohr 17 ein optisches Hilfsmittel 21, beispielsweise einen Spiegel, zugeordnet sein. Anstelle eines optischen Hilfsmittels können auch geeignete elektronische Hilfsmittel, beispielsweise eine Webcam, zur Überwachung des Arbeitsbereiches des Ansaugtrichters 19 eingesetzt werden.

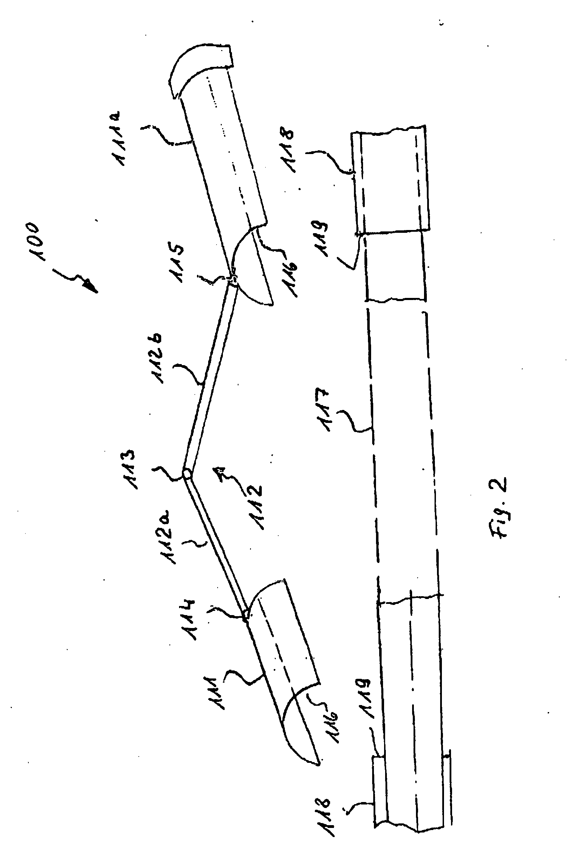

Zur Aufbewahrung und zum Transport der Reinigungsvorrichtung 10, können die ineinander gesteckten einzelnen Rohrsegmente 14, 15 und 16 bzw. der Rohrabschnitte 17a und 17b wieder voneinander getrennt werden. Zur Erleichterung der Trennung der Rohrabschnitte und Rohrsegmente eine erfindungsgemäße Trennvorrichtung 100 vorgesehen, wie sie die Figur 2 zeigt.

Die Trennvorrichtung 100 besteht im Wesentlichen aus zwei Rohrhälften 111 und 111a, die mit einer Streckstrebe 112 miteinander verbunden sind. Die Streckstrebe 112 ist biegesteif und besteht aus zwei angewinkelten Strebenabschnitten 112a und 112b, die etwas mittig mit einem Mittelscharnier 113 miteinander verbunden sind. Beim Strecken der Streckstrebe 112 wird der Winkel zwischen den Strebensabschnitten 112a und 112b bis zu einer Geraden vergrößert wodurch sich ihre Gesamtlänge verlängert.

An ihren freien Enden sind die Strebenabschnitten 112a und 112b durch Endscharniere 114 bzw. 115 mit den Rohrhälften 111 bzw. 111a verbunden. Die Rohrhälften 111 bzw. 111a bestehen aus halbierten Rohren 117, die über das Mittelscharnier 113 miteinander verbunden sind.

Die Rohrhälften 111 und 111a weisen an ihren den Strebenabschnitten 112a und 112b entgegen gesetzten freien Enden Halbrohröffnungen 116 auf. Die Halbrohröffnungen 116 haben einen Innendurchmesser, der im Wesentlichen dem Außendurchmesser der voneinander zu trennenden Rohre 117, beispielsweise dem der Rohrsegmente 14, 15 oder 16 entspricht. Die Rohrsegmente 14, 15 oder 16 weisen dazu Rohrmuffen 118 auf, die jeweils mit Muffenabsätzen 119 versehen sind.

Sollen zwei ineinander gesteckte Rohrsegmente 14, 15 oder 16 zum leichteren Transport und Lagerung wieder voneinander getrennt, d. h. auseinander gezogen werden, so kann auf jedes Rohr 117 eine Rohrhälfte 111 bzw. 111a so gelegt werden, das sie sich an dem jeweiligen Muffenabsatz 119 abstützt. Da die Streckstrebe 112 im gestreckten Zustand der Strebenabschnitten 112a und 112b etwas länger als der Abstand von Muffenabsatz 119 zum nächsten Muffenabsatz 119 ist, werden die jeweiligen Rohrabschnitte 14, 15 oder 16 auseinander gedrückt.

Dazu wird durch einen Druck auf das Mittelscharnier 113 die Streckstrebe 112 in Längsrichtung gestreckt, so dass die Strebenabschnitte 112a und 112b bis zur Geraden gestreckt werden. Über das Mittelscharnier 113 können die zunächst angewinkelten Streckstreben 120, 120a bzw. 121, 121a auf eine Gesamtlänge gestreckt werden, die größer als der Abstand zwischen den Muffenabsätzen 119 ist.

Über die Halbrohrabschnitte 111 oder 111a wirken Austriebskräfte auf die jeweiligen Muffenabsätze 119, durch die die zu trennenden Rohrabschnitte 14, 15 oder 16 auseinander getrieben werden. Das Rohrsystem 12 wird auf diese Weise wieder in einfach zu transportierende Teilstücke zerlegt.

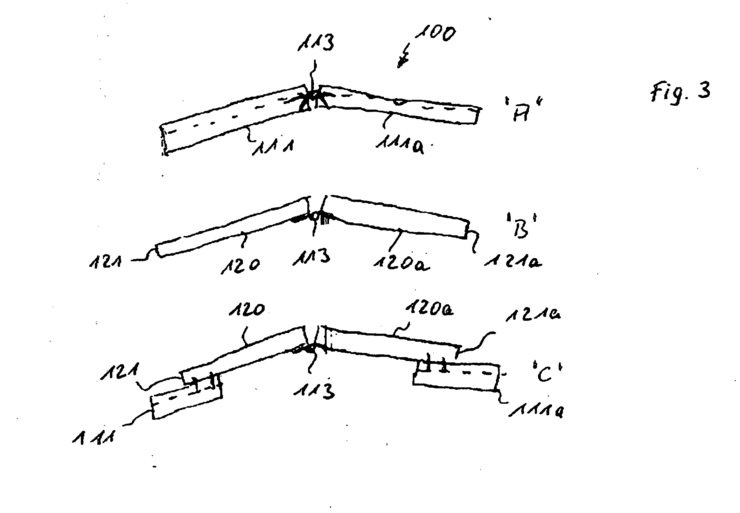

Die Ausführung "A" gemäß Figur 3 zeigt eine Trennvorrichtung 100, die aus reinen Rohrhälften 111 und 111a besteht, die über ein Mittelscharnier 113 miteinander verbunden sind und bis zur Geraden gestreckt werden können.

Die Ausführung "B gemäß Figur 3 zeigt eine Trennvorrichtung 100, die aus nackten Streckstreben 121 und 121a besteht, die über ein Mittelscharnier 113 miteinander verbunden sind und ebenfalls bis zur Geraden gestreckt so verlängert werden können.

Die Ausführung "C" gemäß Figur 3 zeigt eine Trennvorrichtung 100, die aus Streckstreben 121 und 121a besteht, an deren Enden 121 und 121a Rohrhälften 111 und 111a fest angebracht sind. Auch hier sind die Streckstreben 121 und 121a über ein Mittelscharnier 113 miteinander verbunden, so dass sich ihre Gesamtlänge Längsrichtung bis und ebenfalls bis zu einer maximalen geraden Länge gestreckt und so verlängert werden können.

### Bezugszeichen

- 10: Reinigungsvorrichtung
- 11: Saugvorrichtung
- 12: Rohrsystem
- 12a: flexibler Rohrabschnitt
- 13: starrer Rohrabschnitt
- 13a: unteres freies Ende
- 13b: Verstärkung
- 13c: oberes freies Ende
- 14: unteres Rohrsegment
- 15: mittleres Rohrsegment
- 16: oberes Rohrsegment
- 17: Umlenkrohr
- 17a: äußerer Rohrabschnitt
- 17b: innerer Rohrabschnitt
- 18: Anstellwinkel
- 19: Ansaugtrichter
- 19a: Ansaugöffnung
- 20: Dachrinne
- 21: optisches Hilfsmittel
- 22: Dichtring
- 23: Leitmittel
- 100: Trennvorrichtung
- 111, 111a: Rohrhälfte
- 112: Streckstrebe
- 112a, 112b: Strebenabschnitt
- 113: Mittelscharnier
- 114, 115: Endscharnier
- 116: Halbrohröffnung
- 117: zu trennendes Rohr
- 118: Rohrmuffe
- 119: Muffenabsatz
- 120, 120a: nackte Streckstrebe
- 121, 121a: Streckstrebenende

## Patentansprüche

1. Vorrichtungssatz zum Reinigen von Dachrinnen, umfassend mindestens eine Saugvorrichtung (11) und ein verlängerbares Saugrohrsystem (12),
die Saugvorrichtung (11) mit dem verlängerbaren Saugrohrsystem (12) verbindbar ist,
das Saugrohrsystem (12) aus einem flexiblen Rohrabschnitt (12a) und einem starren Rohrabschnitt (13) aus ineinander steckbaren Rohrsegmenten (14, 15, 16) besteht, und dem starren Rohrabschnitt (13) ein Ansaugtrichter (19) zugeordnet ist, der in das Profil einer zu reinigenden, handelsüblichen Dachrinne (20) einführbar ist,
**dadurch gekennzeichnet, dass**
der flexible Rohrabschnitt (12a) aus einem flexiblen Kunststoffrohr mit eingearbeiteten Verstärkungen (13b) besteht,
wobei die Einzellänge der ineinandersteckbaren Rohrsegmente (14, 15, 16) des starren Rohrabschnitt (13) etwa zehnmal so groß wie ihr Innendurchmesser ist, und die ineinander steckbaren Rohrsegmente (14, 15, 16) für einen Innendruck von mindestens 150 mbar bis 220 mbar ausgelegt sind, und dadurch, dass
der Vorrichtungssatz eine Trennvorrichtung (100) zum Trennen der ineinander gesteckten Rohrsegmente (14, 15, 16) umfasst,
wobei die Trennvorrichtung (100) eine Streckstrebe (112) aufweist, die aus zwei gegeneinander klappbaren Strebenabschnitten (112a, 112b) besteht, die durch ein Mittelscharnier (113) verbunden sind, und deren freien Enden (121, 121a) mit Kontaktmitteln (111, 111a; 120, 120a) zur Anlage an Rohrmuffen (118) der Rohrsegmente (14, 15, 16) versehen sind,
wobei die Streckstrebe (112) im gestreckten Zustand der Strebenabschnitte (112a, 112b) etwas länger als der Abstand von der Rohrmuffe eines Rohrsegments (14, 15, 16) zur Rohrmuffe des nächsten Rohrsegments (14, 15, 16) ist.

2. Satz zum Reinigen von Dachrinnen nach Anspruch 1, **dadurch gekennzeichnet, dass** der flexible Rohrabschnitt (12a) in der Länge ohne Durchmesserverringerung bei Zugspannung variierbar ist, ein oberes Umlenkrohr (17) aus zwei bis vier abgewinkelten Rohrabschnitten (17a, 17b) besteht, das dem oberen Rohrsegment (16) zugeordnet ist, und die abgewinkelten Rohrabschnitte (17a, 17b) frei einstellbar und axial gegeneinander verdrehbar sind.

3. Satz zum Reinigen von Dachrinnen nach Anspruch 2, **dadurch gekennzeichnet, dass** der Anstellwinkel (18) zwischen dem oberen Rohrsegment (16) und dem Umlenkrohr (17) mittels der abgewinkelten Rohrabschnitte (17a, 17b) zwischen ca. 90° und 180° variierbar ist.

4. Satz zum Reinigen von Dachrinnen nach den Ansprüchen 1 bis 3, **dadurch gekennzeichnet, dass** dem inneren Rohrabschnitt (17b) des Umlenkrohrs (17) ein Ansaugtrichter (19) zugeordnet ist.

5. Satz zum Reinigen von Dachrinnen nach Anspruch 4, **dadurch gekennzeichnet, dass** der Ansaugtrichter (19) relativ zu dem Umlenkrohr (17) drehbar ausgebildet und mit Strömungsleitmitteln (23) versehen ist.

6. Satz zum Reinigen von Dachrinnen nach den Ansprüchen 4 und 5, **dadurch gekennzeichnet, dass** der Ansaugtrichter (19) rechteckig ausgebildet ist und eine Schmalseite mit einer Breite von ca. 20 bis 40 mm aufweist.

7. Satz zum Reinigen von Dachrinnen nach den Ansprüchen 4 bis 6, **dadurch gekennzeichnet, dass** dem Ansaugtrichter (19) ein optisches Hilfsmittel (21) zur Überwachung seiner Lage in der zu reinigenden Dachrinne (20) zugeordnet ist.

8. Satz zum Reinigen von Dachrinnen nach Anspruch 1, **dadurch gekennzeichnet, dass** die Streckstreben (112) biegesteif sind und an ihren freien Enden (121, 121a) mit Rohrhälften (111, 111a) versehen sind, die Halbrohröffnungen (116) aufweisen, die dem Außendurchmesser der voneinander zutrennenden Rohre (117) entsprechen.

9. Satz zum Reinigen von Dachrinnen nach Anspruch 1, **dadurch gekennzeichnet, dass** die Trennvorrichtung (100) nackte Streckstreben (121, 120a) aufweist, die über ein Mittelscharnier (113) miteinander verbunden sind.

## Claims

1. Assembly for cleaning rain gutters, comprising at least one suction device (11) and an extensible system of suction tubes (12),
with the suction device (11) adapted to be connected with the extensible suction tube system (12),
the suction tube system (12) comprising a flexible tube section (12a) and a rigid tube section (13) consisting of tube segments (14, 15, 16) configured to be telescopingly introduced into each other, and rigid tube section (193) having associated therewith a intake funnel (19) adapted to be introduced into the lumen of a commercially available rain gutter (20) to be cleaned,
**characterized in that**
flexible tube section (12) consists of flexible plastics tubing with reinforcements (13b) incorporated therein,
with said tube segments (14, 15, 16) of rigid tube section (13) configured to be telescopingly plugged into each other each having a length at least ten times the internal diameter thereof, and with said tube segments (14, 15, 16) being dimensioned to sustain an internal pressure of at least 150 mbar to 220 mbar,
and **in that** said assembly includes separating means (100) for separating said telescopingly pluggable tube segments (14, 15, 16),
with separating means (100) including extensible rod means (112) consisting of two rod sections (112a, 112b) adapted to be folded against each other, connected by an intervening hinge (113) and having their free ends (121, 121a) provided with contact means (111, 111a; 120, 120a) for engaging sockets (118) on tube segments (14, 15, 16), and
with extensible rod means (112) in the extended position of rod sections (112a, 112b) having a length somewhat greater than the distance between the socket on one and the one on the next following tube segment (14, 15, 16).

2. Assembly for cleaning rain gutters as claimed in claim 1, **characterized in that** flexible tube section (12a) is configured to be variable in length under tensile stress without reducing its diameter, **in that** an upper diverter tube (17) consists of two to four angled tube portions (17a, 17b) and is associated with top tube segment (16),
and **in that** angular tube portions (17a, 17b) are configured to be freely positioned, and axially twisted, relative to each other.

3. Assembly for cleaning rain gutters as claimed in claim 2, **characterized in that** the angle (18) between top tube segment (16) and diverter tube (17) is variable between about 90° and 180° by means of said angled tube portions (17a, 17b).

4. Assembly for cleaning rain gutters as claimed in claims 1 to 3, **characterized in that** inner tube portion (17b) of diverter tube (17) has an intake funnel (19) associated therewith.

5. Assembly for cleaning rain gutters as claimed in claim 4, **characterized in that** intake funnel (19) is configured to be rotatable relative to diverter tube (17) and provided with flow directing means (23).

6. Assembly for cleaning rain gutters as claimed in claim 4, **characterized in that** intake funnel (19) is rectangular in shape with a narrow side approximately 20 mm to 40 mm wide.

7. Assembly for cleaning rain gutters as claimed in claims 4 to 6, **characterized in that** intake funnel (19) has associated therewith optical aid means (21) for monitoring the location thereof within the rain gutter (20) to be cleaned.

8. Assembly for cleaning rain gutters as claimed in claim 1, **characterized in that** extensible rods (112) are flexurally rigid and are provided at their free ends (121, 121 a) with tubing halves (111, 111a) having tubing half openings (116) corresponding to the outer diameter of tubes (117) to be separated.

9. Assembly for cleaning rain gutters as claimed in claim 1, **characterized in that** separating means (100) comprises bare extensible rods (121, 121 a) connected by an intervening hinge (113).

## Revendications

1. Ensemble fonctionnel destiné au nettoyage de gouttières, comprenant au moins un dispositif d'aspiration (11) et un système tubulaire d'aspiration (12) extensible,
ledit dispositif d'aspiration (11) pouvant être relié audit système tubulaire d'aspiration (12) extensible,
ledit système tubulaire d'aspiration (12) étant constitué d'un tronçon tubulaire flexible (12a) et d'un tronçon tubulaire rigide (13) composé de segments de tubes (14, 15, 16) pouvant être emboîtés les uns dans les autres, et un entonnoir d'aspiration (19), affecté audit tronçon tubulaire rigide (13), pouvant être inséré dans le profil d'une gouttière (20) à usage commercial courant, devant être nettoyée,
**caractérisé par le fait que**
le tronçon tubulaire flexible (12a) est constitué d'une tubulure flexible en matière plastique pourvue de renforcements intégrés (13b),
sachant que la longueur individuelle des segments de tubes (14, 15, 16) du tronçon tubulaire rigide (13), emboîtables les uns dans les autres, représente environ le décuple de leur diamètre intérieur, et que lesdits segments de tubes (14, 15, 16) emboîtables les uns dans les autres sont dévolus à une pression intérieure d'au moins 150 mbar à 220 mbar ; et **par le fait que**
ledit ensemble fonctionnel inclut un dispositif de séparation (100) conçu pour séparer les segments de tubes (14, 15, 16) emboîtés les uns dans les autres,
sachant que ledit dispositif de séparation (100) présente une entretoise déployable (112) composée de deux tronçons (112a, 112b) qui peuvent être rabattus l'un vers l'autre par pivotement, sont reliés par l'intermédiaire d'une charnière centrale (113), et dont les extrémités libres (121, 121a) sont munies de moyens de contact (111, 111a ; 120, 120a) dédiés à une venue en applique contre des manchons tubulaires (118) desdits segments de tubes (14, 15, 16),
l'entretoise déployable (112) étant sensiblement plus longue, à l'état déployé des tronçons (112a, 112b) de ladite entretoise, que la distance comprise entre le manchon tubulaire d'un segment de tube (14, 15, 16) et le manchon tubulaire du segment de tube (14, 15, 16) successif.

2. Ensemble de nettoyage de gouttières, selon la revendication 1, **caractérisé par le fait que** la longueur du tronçon tubulaire flexible (12a) peut être modifiée sans diminution de diamètre en cas de contrainte à la traction, une tubulure déflectrice supérieure (17), composée de deux à quatre tronçons tubulaires coudés (17a, 17b), étant affectée au segment de tube (16) supérieur, et lesdits tronçons tubulaires coudés (17a, 17b) étant réglables et pouvant tourner mutuellement dans le sens axial, de manière libre.

3. Ensemble de nettoyage de gouttières, selon la revendication 2, **caractérisé par le fait que** l'angle (18), ajusté entre le segment de tube (16) supérieur et la tubulure déflectrice (17), peut être modifié entre environ 90° et 180° au moyen des tronçons tubulaires coudés (17a, 17b).

4. Ensemble de nettoyage de gouttières, selon les revendications 1 à 3, **caractérisé par le fait qu'**un entonnoir d'aspiration (19) est affecté au tronçon tubulaire intérieur (1 7b) de la tubulure déflectrice (17).

5. Ensemble de nettoyage de gouttières, selon la revendication 4, **caractérisé par le fait que** l'entonnoir d'aspiration (19) est réalisé avec faculté de rotation par rapport à la tubulure déflectrice (17), et est doté de moyens (23) de guidage de l'écoulement.

6. Ensemble de nettoyage de gouttières, selon les revendications 4 et 5, **caractérisé par le fait que** l'entonnoir d'aspiration (19) est de réalisation rectangulaire, et présente un petit côté offrant une largeur d'environ 20 à 40 mm.

7. Ensemble de nettoyage de gouttières, selon les revendications 4 à 6, **caractérisé par le fait qu'**un moyen auxiliaire optique (21) est affecté à l'entonnoir d'aspiration (19), en vue de surveiller sa position dans la gouttière (20) à nettoyer.

8. Ensemble de nettoyage de gouttières, selon la revendication 1, **caractérisé par le fait que** les entretoises déployables (112) sont rigides à la flexion et sont pourvues, à leurs extrémités libres (121, 121a), de moitiés de tubes (111, 111a) comportant des ouvertures semi-tubulaires (116) qui correspondent au diamètre extérieur des tuyaux (117) devant être séparés les uns des autres.

9. Ensemble de nettoyage de gouttières, selon la revendication 1, **caractérisé par le fait que** le dispositif de séparation (100) présente des entretoises déployables (120, 120a) dépouillées, reliées l'une à l'autre par l'intermédiaire d'une charnière centrale (113).
